# EUROPEAN PATENT APPLICATION

(11) **EP 4 641 464 A1**
(43) Date of publication of application: **29.10.2025**
(21) Application number: 25163088.5
(22) Date of filing: 11.03.2025
(51) Int. Cl.: G06Q 20/20, G07G 1/00, G07G 1/01, G07G 1/14

(54) **TRANSACTION PROCESSING SYSTEM, TRANSACTION PROCESSING DEVICE AND TRANSACTION PROCESSING METHOD**

(30) Priority: 22.04.2024 JP 2024068885
(71) Applicant: Toshiba TEC Kabushiki Kaisha, Tokyo 141-8562 (JP)
(72) Inventor: Okawa, Yoshiaki, Tokyo, 141-8562 (JP)
(74) Representative: Bandpay & Greuter

(57) **Abstract**

According to one embodiment, a store clerk is enabled to efficiently assist a self-service operation of a customer. In one such embodiment, a transaction processing device includes a first display unit, a second display unit, and a control unit. The first display unit displays a first image to accept an input operation by a customer. The second display unit displays a second image to accept an input operation by a store clerk, of the same content as the first image displayed by the first display unit. The control unit accepts the input operation by the store clerk on the second image displayed by the second display unit, without accepting the input operation on the first image displayed by the first display unit, and causes the first display unit to display an indication of the store clerk's input operation.

## Description

### FIELD

Embodiments described herein relate generally to a transaction processing system, a transaction processing device, and a transaction processing method for retail store transactions and the like.

### BACKGROUND

As a transaction processing system for a large retail store, such as a supermarket or a home improvement store, a two-person system may be employed. The two-person transaction processing system includes an input device operated by a store clerk, called a checker, and a transaction processing device operated by a store clerk, called a cashier. The input device is a device configured to input information about a merchandise item to be purchased,. For example, the input device may read a barcode attached to the merchandise item. The transaction processing device is a device configured to process merchandise sales data of the merchandise item to be purchased, based on the information inputted via the input device, and then handle settlement (payment) of the transaction with the customer. In the two-person transaction processing system, since the input device and the transaction processing device are separately provided, the input of information about a merchandise item to be purchased by the next customer can be started at the input device while the settlement for the previous customer is being handled at the transaction processing device. Thus, the system can efficiently deal with customers.

However, recently, in view of labor costs and measures against infectious diseases or the like, it has been increasingly demanded that the customer himself or herself should carry out the operations related to the depositing of money necessary for the settlement of the transaction. In the two-person transaction processing system, a customer may also be made to carry out, by himself or herself, an operation related to the depositing of money or the like into the transaction processing device. Thus, the store clerk serving as a cashier might no longer be needed and therefore the labor costs can be reduced.

However, not all customers may necessarily be able to efficiently carry out the operations related to self-service payment processing. For example, some customers such as elderly people may have a hard time carrying out the operations related to the depositing of money or making payments and therefore it may take a relatively long time until a transaction is settled. Therefore, a mechanism that enables a store clerk to efficiently assist a self-service operation of a customer is demanded.

### DISCLOSURE OF THE INVENTION

To this end, a transaction processing device, a transaction processing system and a transaction method according to appended claims are provided.

According to the transaction processing method, the second display unit may be caused to display the second image only after the acceptance of the received request for assistance.

The transaction processing method may further comprise a step of transferring the request for assistance to another device based on a non-acceptance operation performed by the store clerk via the second display unit.

According to the transaction processing method, the acceptance of the request for assistance may be provided by an acceptance operation performed by the store clerk via the second display unit.

The transaction processing method may further comprise a step of transferring the request for assistance to another device based on a non-acceptance operation performed by the store clerk via the second display unit.

According to the transaction processing method, the other device may be another transaction processing device on a different checkout lane.

### BRIEF DESCRIPTION OF THE DRAWINGS

FIG. 1 is a block diagram showing a schematic configuration of a transaction processing system according to an embodiment.
FIG. 2 is a schematic view showing a positional relationship between an input device, a transaction processing device, a settlement device, and an instruction device provided in one settlement lane.
FIG. 3 is a block diagram of a transaction processing device.
FIG. 4 is a block diagram of a settlement device.
FIG. 5 is a block diagram n of a holding server.
FIG. 6 is a block diagram of an instruction device.
FIG. 7 is a sequence chart showing an example of operations of the input device, the transaction processing device, the settlement device, and the instruction device.
FIG. 8 is a sequence chart showing an example of operations of the devices.
FIG. 9 is a sequence chart showing an example of operations of the devices.
FIG. 10 shows an example of a registration image.
FIG. 11 shows an example of a subtotal image.
FIG. 12 shows an example of a guidance image.
FIG. 13 shows the configuration of a self-service operation assistance function provided in the transaction processing device.
FIG. 14 shows an example of a payment method selection image.
FIG. 15 shows an example of an assistance request notification image.
FIG. 16 is a flowchart showing aspects of procedures of information processing executed by a processor of the transaction processing device in correlation with the self-service operation assistance function.
FIG. 17 is a flowchart showing aspects of procedures of information processing executed by a processor of another device capable of receiving a store clerk assistance notification event.
FIG. 18 shows an example of the assistance request notification image.
FIG. 19 shows an example of an electronic money selection image.
FIG. 20 shows an example of an insufficient balance image.
FIG. 21 shows an example of an insufficient balance image.
FIG. 22 shows an example of an insufficient balance image.
FIG. 23 shows an example of an insufficient balance image.

### DETAILED DESCRIPTION

An embodiment described herein provides a transaction processing device that enables a store clerk to efficiently assist a self-service operation of a customer during checkout processing or the like.

In general, according to one embodiment, a transaction processing device includes a first display unit configured to display a first image for accepting an input operation by a customer, a second display unit configured to display a second image for accepting an input operation by a store clerk, and a control unit. The second image has the same content as the first image. The control unit is configured to receive a request for assistance from the customer via the first display unit, and, after an acceptance of the received request for assistance, pause acceptance of input operations via the first display unit but accept input operations via the second display unit displaying the second image, then cause the first image being displayed by the first display unit to indicate the input operations performed by the store clerk via the second display unit displaying the second image.

Certain example embodiments of a transaction processing device that enables a store clerk to efficiently assist a self-service operation of a customer will now be described, using the drawings.

In this example, a transaction processing device enables a store clerk to efficiently assist a customer who has a question or concern about performance of a checkout/settlement operation when the customer is performing a self-service operation such as depositing money necessary for the payment/settlement of a retail store transaction will be described. Such examples are non-limiting. In the following, an overview of a transaction processing system including a transaction processing device of an embodiment will be described.

### Description of Configuration of Transaction Processing System

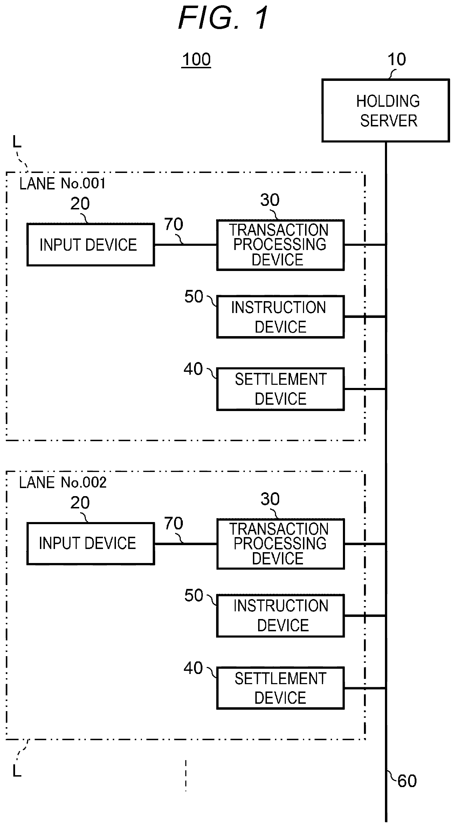

FIG. 1 is a block diagram showing a schematic configuration of a transaction processing system 100 according to an embodiment. The transaction processing system 100 has a holding server 10. The transaction processing system 100 also has an input device 20, a transaction processing device 30, a settlement device 40, and an instruction device 50 on a per settlement lane L basis. The settlement lane L includes an aisle where a customer carrying out the settlement of a transaction stands in a line. When the transaction processing system 100 is introduced at a retail store, a consumer who purchases a merchandise item is a customer. If the transaction processing system 100 is introduced at a fee-charging facility such as an amusement park, an art museum, or a theater, a user who uses the facility is a customer. For each settlement lane L, a three-digit lane number, for example, can be allocated as lane identification information unique to each lane. The settlement lane L may also be referred to as a checkout lane, a payment lane, or the like.

In the transaction processing system 100, the holding server 10, and the transaction processing device 30 and the settlement device 40 for each settlement lane L, are connected in a bidirectionally communicable manner via a communication network 60 such as a local area network (LAN). The input device 20 is connected to the transaction processing device 30 via a transmission cable 70 on a per settlement lane L basis. Also, in the transaction processing system 100, the instruction device 50 in each settlement lane L is connected to the communication network 60 via a wire or wirelessly.

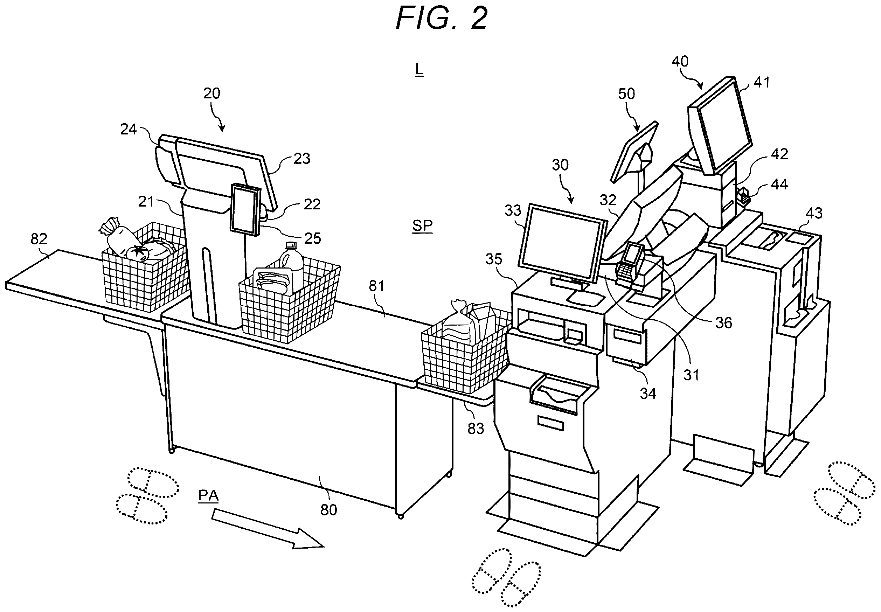

FIG. 2 is a schematic view showing the positional relationship between the input device 20, the transaction processing device 30, the settlement device 40, and the instruction device 50 provided in one settlement lane L. FIG. 2 shows a settlement lane L in a retail store such as a supermarket or a home improvement store. In the retail store of this type, a selling area where merchandise items are displayed, and a payment area referred to as a checkout area or the like, are separated. The settlement lane L is provided in the payment area.

In the payment area, a checkout counter 80 is provided. In the retail store, the checkout counter 80 is installed along a pathway PA through which a customer walks in a direction indicated by an arrow in the illustration. In the retail store, the input device 20 is attached to a top surface 81 of the checkout counter 80. A part upstream of the input device 20 along the pathway PA is a table 82 to place a merchandise item to be purchased that is yet to be registered, and a downstream part is a table 83 for placing a merchandise item to be purchased that is already registered.

The input device 20 has a stationary scanner 21, a handheld scanner 22, a first touch panel 23, a keyboard 24, and a display 25, as input-output devices. The stationary scanner 21 of the input device 20 is arranged in such a way as to protrude upward from the top surface 81 of the checkout counter 80, and the handheld scanner 22, the first touch panel 23, the keyboard 24, and the display 25 are arranged around the stationary scanner 21.

The stationary scanner 21 of the input device 20 is fixed to the top surface of the checkout counter 80. The stationary scanner 21 is a vertical type and has a barcode reading window located at the side opposite to the pathway PA. The handheld scanner 22 of the input device 20 is retained at one side part of the stationary scanner 21. The first touch panel 23 is attached to an upper part of the stationary scanner 21 in such a way that an operation panel surface of the first touch panel 23 faces the same direction as the reading window of the stationary scanner 21. The keyboard 24 is attached to one side part of the first touch panel 23 in such a way that the keyboard 24 faces the same direction as the first touch panel 23. Also, the display 25 is attached to one side part of the stationary scanner 21 in such a way that a display image on the display 25 faces the pathway PA. The display 25 may be a touch panel.

Such an arrangement of the input-output devices enables an employee, that is, a so-called store clerk, standing in a space SP across the checkout counter 80 from the pathway PA, to operate the stationary scanner 21, the handheld scanner 22, the first touch panel 23 or the keyboard 24 and thus input information about a transaction with a customer. The information about a transaction with a customer is, for example, information about a merchandise item to be purchased that is purchased by the customer. The store clerk can check the merchandise name, the unit price or the like of the merchandise item to be purchased, based on the information displayed on the first touch panel 23. The customer can check the merchandise name, the unit price or the like of the merchandise item to be purchased, based on the information displayed on the display 25. The input device 20 may be referred to as a scanner device or the like.

The transaction processing device 30 is a computer device functioning as a terminal of a point-of-sales (POS) system. In the retail store, the transaction processing device 30 is installed at a downstream end of the checkout counter 80.

The transaction processing device 30 has components such as a keyboard 31, a second touch panel 32, a third touch panel 33, a printer 34, an automatic change machine 35, and a cashless settlement terminal 36. The keyboard 31 and the second touch panel 32 of the transaction processing device 30 are arranged in such a way as to be operable by the store clerk. The third touch panel 33, the printer 34, the automatic change machine 35, and the cashless settlement terminal 36 are arranged in such a way as to be operable by the customer.

Such an arrangement enables the store clerk standing in the space SP to operate the keyboard 31 or the second touch panel 32 while viewing an image displayed on an operation panel surface of the second touch panel 32. The customer standing in the pathway PA can check, on the spot, information in an image displayed on an operation panel surface of the third touch panel 33, for example, information about the payment of the price (payment processing). A customer paying the price of a transaction by cash can insert cash in the automatic change machine 35 and collect returned bills and coins, while standing in the pathway PA. A customer paying by cashless settlement can operate the cashless settlement terminal 36 to pay in a cashless way while standing in the pathway PA. When payment of the transaction price is complete, the printer 34 dispenses a receipt. Therefore, the customer can receive the receipt on the spot.

In this way, the transaction processing device 30 functions as a self-service-type device with which the customer carries out the operation related to the payment of the price by himself or herself. The transaction processing device 30 may be referred to as a POS terminal, an electronic cash register, a sales processing device or the like.

The settlement device 40, too, is a self-service-type device with which the customer carries out the operation related to the payment of the price by himself or herself. The settlement device 40 is used by a customer who cannot pay with the transaction processing device 30 because, for example, the transaction processing device 30 may be in use by another customer. Therefore, in the retail store, the settlement device 40 is installed downstream of the transaction processing device 30 in relation to the direction of movement of the customer indicated by the arrow in the illustration. Specifically, the settlement device 40 is installed along a side opposite to a side of the transaction processing device 30 facing the customer standing in the pathway PA in order to operate the transaction processing device 30.

The settlement device 40 has components such as a fourth touch panel 41, a printer 42, an automatic change machine 43, and a cashless settlement terminal 44. An operation panel surface of the fourth touch panel 41, a receipt dispensing port of the printer 42, a money insertion-dispending port of the automatic change machine 43, and an operation unit of the cashless settlement terminal 44 are all arranged at one side of the main body of the device. In the retail store, the settlement device 40 is installed in such a way that one side thereof is located on the side facing the customer having passed by the front of the transaction processing device 30.

Such an installation enables the customer facing the settlement device 40 to check, on the spot, information of an image displayed on the fourth touch panel 41. For example, information about the payment of the price may be displayed to the customer at the settlement device 40. A customer paying the price by cash can insert cash in the automatic change machine 43 and collect returned bills and coins. A customer paying the price by cashless settlement can operate the cashless settlement terminal 44 to pay in a cashless way. When the payment is complete, the printer 42 dispenses a receipt. Therefore, the customer can receive the receipt on the spot. The settlement device 40 can also be referred to as a checkout machine, a self-service POS terminal, a payment machine or the like.

The instruction device 50 gives an instruction (a call) to send information about a transaction held in the holding server 10 to the settlement device 40. The holding server 10 holds information about a transaction with a customer in response to an action of the transaction processing device 30. Upon accepting a call for information about a transaction to be sent to the settlement device 40, the instruction device 50 sends the instruction to the holding server 10.

As an example of the instruction device 50, a tablet terminal can be used. The tablet terminal can be operated by a touch, a pen or the like. The instruction device 50 is operated by the store clerk. Therefore, in the retail store, the instruction device 50 may be installed at a position at which the store clerk will be present in the space SP so the store clerk can easily operate the instruction device 50. The position of installation of the instruction device 50 is not particularly limited. FIG. 2 shows an example where the instruction device 50 is installed in such a way that the image displayed thereon face the space SP, at the side opposite to the side operated by the customer, of the settlement device 40.

### Description of Configuration of Transaction Processing Device

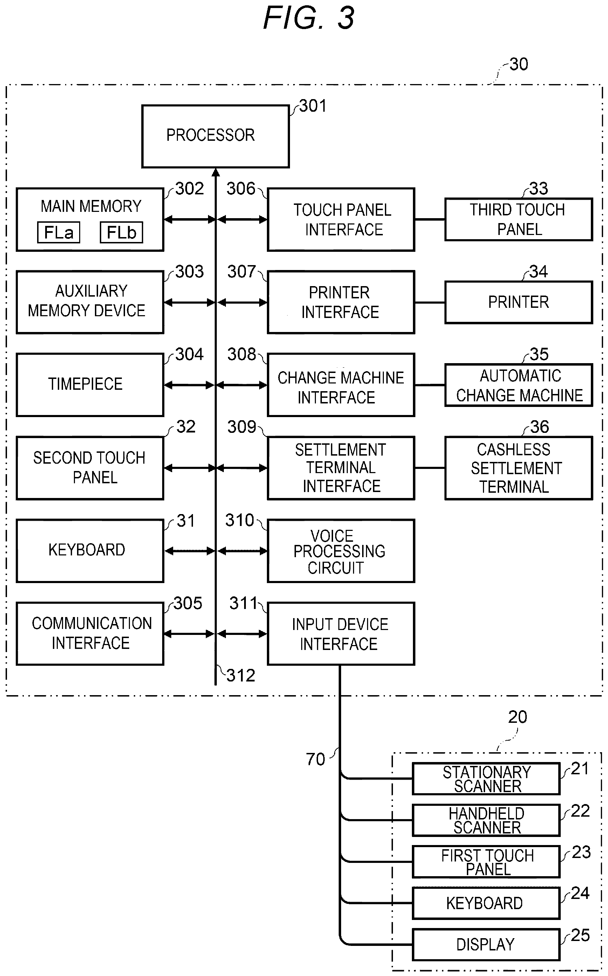

FIG. 3 is a block diagram of the transaction processing device 30. The transaction processing device 30 has a processor 301, a main memory 302, an auxiliary memory device 303, a timepiece 304, a communication interface 305, a touch panel interface 306, a printer interface 307, a change machine interface 308, a settlement terminal interface 309, a voice processing circuit 310, an input device interface 311, and a system transmission line 312 or the like. The system transmission line 312 includes an address bus, a data bus, a control signal line or the like. The system transmission line 312 connects the processor 301 to the other parts and transmits a data signal sent and received between the processor 301 and the other parts.

In the transaction processing device 30, a computer is formed by connecting the processor 301 to the main memory 302, the auxiliary memory device 303, the timepiece 304, the communication interface 305, the touch panel interface 306, the printer interface 307, the change machine interface 308, the settlement terminal interface 309, the voice processing circuit 310, and the input device interface 311 via the system transmission line 312. In the transaction processing device 30, the keyboard 31 and the second touch panel 32 are connected to this computer via the system transmission line 312. Also, in the transaction processing device 30, the third touch panel 33 is connected to the touch panel interface 306. The printer 34 is connected to the printer interface 307. The automatic change machine 35 is connected to the change machine interface 308. The cashless settlement terminal 36 is connected to the settlement terminal interface 309.

The processor 301 controls each part in order to implement various functions of the transaction processing device 30 according to an operating system or an application program. The processor 301 is, for example, a central processing unit (CPU). The processor 301 is a multi-core processor that includes a plurality of processor cores and can execute a plurality of processes in parallel.

The main memory 302 includes a nonvolatile memory area and a volatile memory area. The main memory 302 stores an operating system or an application program in the nonvolatile memory area. In some cases, the main memory 302 may store data necessary for the processor 301 to execute processing to control each part, in the nonvolatile or volatile memory area. The volatile memory area in the main memory 302 is used as a work area where the processor 301 rewrites data as appropriate. The nonvolatile memory area is, for example, a read-only memory (ROM). The volatile memory area is, for example, a random-access memory (RAM).

For example, an electrically erasable programmable read-only memory (EEPROM), a hard disk drive (HDD), or a solid-state drive (SSD) or the like can be the auxiliary memory device 303. The auxiliary memory device 303 stores data used by the processor 301 to execute various processing and data generated by the processor 301 through processing, or the like. In some cases, the auxiliary memory device 303 may store the application program.

The timepiece 304 tracks date and time. The processor 301 processes the date and time tracked by the timepiece 304, as the current date and time.

The communication interface 305 is an interface for performing data communication with the holding server 10 connected to the communication network 60. The communication interface 305 is also an interface for performing data communication with another server such as a POS server similarly connected to the communication network 60. The POS server is a computer having a merchandise master that stores merchandise data such as the merchandise name and the unit price of each merchandise item available for sale at the store, and is configured to collect and aggregate merchandise sales data of merchandise items to be purchased that is processed by the transaction processing device 30, and manage the sales, stock and the like as of the time of sales. The communication interface 305 can also perform data communication with the transaction processing device 30 and the settlement device 40 in another settlement lane L that are connected to the communication network 60.

The touch panel interface 306, the printer interface 307, the change machine interface 308, and the settlement terminal interface 309 are all interfaces for performing data communication with devices externally attached to the transaction processing device 30. That is, the touch panel interface 306 performs data communication with the third touch panel 33. The printer interface 307 performs data communication with the printer 34. The change machine interface 308 performs data communication with the automatic change machine 35. The settlement terminal interface 309 performs data communication with the cashless settlement terminal 36.

The voice processing circuit 310 has a function of converting voice/sound collected by a microphone to an audio signal and converting an audio signal to voice/sound and then outputting the voice/sound to a speaker. A microphone and the speaker may be provided near the third touch panel 33. The store clerk standing in the space SP wears a headset. When the store clerk turns on the headset, the voice processing circuit 310 outputs voice/sound collected by the microphone near the third touch panel 33. The collected voice/sound is output from a speaker of the headset. The voice processing circuit 310 also outputs voice/sound collected by a microphone of the headset to the speaker near the third touch panel 33. Thus, the customer operating the third touch panel 33, the automatic change machine 35, the cashless settlement terminal 36 or the like by self-service can talk to the store clerk who is wearing the headset.

The input device interface 311 is for performing data communication with the input device 20 connected via the transmission cable 70. That is, the input device interface 311 performs data communication with each of the stationary scanner 21, the handheld scanner 22, the first touch panel 23, the keyboard 24, and the display 25.

In the transaction processing device 30, a part of the volatile memory area in the main memory 302 serves as a first file area FLa and a second file area FLb. The first file area FLa is for storing a transaction file generated on a per customer basis. The transaction file stores information about a transaction with a customer processed as one transaction, for example, information about a merchandise item to be purchased. Specifically, the transaction file stores merchandise sales data including fields such as merchandise code, merchandise name, unit price, number of items to be purchased, and amount of sales. The merchandise code is a univocal code set on a per merchandise item basis in order to identify each merchandise item. The amount of sales is an amount calculated by multiplying the unit price by the number of items to be purchased. The merchandise sales data may include at least the merchandise code and the number of items to be purchased, of the merchandise item to be purchased.

The second file area FLb is for temporarily storing a transaction file of a customer paying using the transaction processing device 30. The second file area FLb stores a transaction file stored in the first file area FLa or a transaction file held in the holding server 10. As a transaction file is stored in the second file area FLb in this way, the customer whose information about a transaction is stored in this transaction file can operate the transaction processing device 30 by self-service to pay and thus can settle the transaction.

### Description of Configuration of Settlement Device

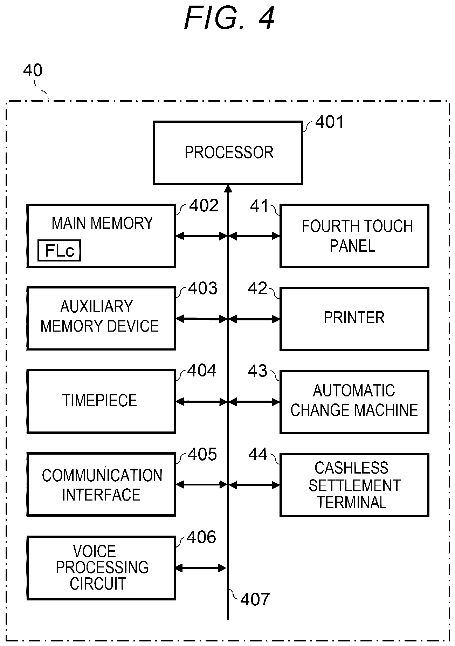

FIG. 4 is a block diagram of the settlement device 40. As illustrated, the settlement device 40 has a processor 401, a main memory 402, an auxiliary memory device 403, a timepiece 404, a communication interface 405, a voice processing circuit 406, and a system transmission line 407 or the like. The system transmission line 407 includes an address bus, a data bus, a control signal line or the like. The system transmission line 407 connects the processor 401 to the other parts and transmits a data signal sent and received between the processor 401 and the other parts.

In the settlement device 40, a computer is formed by connecting the processor 401 to the main memory 402, the auxiliary memory device 403, the timepiece 404, the communication interface 405, and the voice processing circuit 406 via the system transmission line 407. In the settlement device 40, the fourth touch panel 41, the printer 42, the automatic change machine 43, and the cashless settlement terminal 44 are connected to this computer via the system transmission line 407.

The processor 401 controls each part in order to implement various functions of the settlement device 40 according to an operating system or an application program. The processor 401 is, for example, a CPU. The processor 401 is a multi-core processor that includes a plurality of processor cores and can execute a plurality of processes in parallel.

The main memory 402 includes a nonvolatile memory area and a volatile memory area. The main memory 402 stores an operating system or an application program in the nonvolatile memory area. In some cases, the main memory 402 may store data necessary for the processor 401 to execute processing to control each part, in the nonvolatile or volatile memory area. The volatile memory area in the main memory 402 is used as a work area where the processor 401 rewrites data as appropriate. The nonvolatile memory area is, for example, a ROM. The volatile memory area is, for example, a RAM.

For example, an EEPROM, an HDD, or an SSD or the like can be the auxiliary memory device 403. The auxiliary memory device 403 stores data used by the processor 401 to execute various processing and data generated by the processor 401 through processing, or the like. In some cases, the auxiliary memory device 403 may store the application program.

The timepiece 404 tracks date and time. The processor 401 processes the date and time tracked by the timepiece 404, as the current date and time.

The communication interface 405 is an interface for performing data communication with the holding server 10 and the instruction device 50 connected to the communication network 60.

The voice processing circuit 406 has a function of converting voice/sound collected by a microphone to an audio signal and converting an audio signal to voice/sound and then outputting the voice/sound from a speaker. A microphone and the speaker can be provided near the fourth touch panel 41. When the store clerk turns on the headset, the voice processing circuit 406 can output voice/sound collected by the microphone near the fourth touch panel 41 to the headset. The voice processing circuit 406 also outputs voice/sound collected by the headset to the speaker near the fourth touch panel 41. Thus, the customer operating the fourth touch panel 41, the automatic change machine 43, the cashless settlement terminal 44 or the like by self-service can talk to the store clerk wearing the headset.

In the settlement device 40, a part of the volatile memory area in the main memory 402 serves as a third file area FLc. The third file area FLc is for temporarily storing a transaction file of a customer paying at the settlement device 40. The third file area FLc stores a transaction file held in the holding server 10.

### Description of Configuration of Holding Server

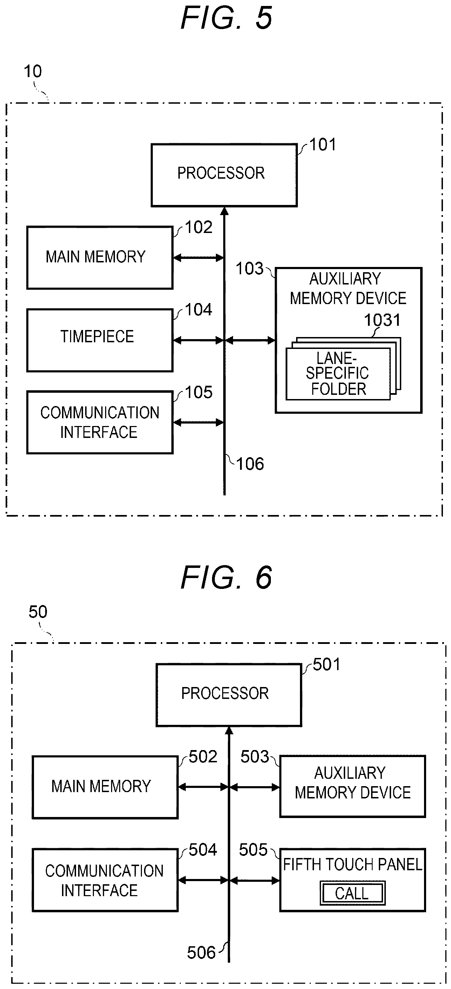

FIG. 5 is a block diagram of the holding server 10. As illustrated, the holding server 10 has a processor 101, a main memory 102, an auxiliary memory device 103, a timepiece 104, a communication interface 105, and a system transmission line 106 or the like. The system transmission line 106 includes an address bus, a data bus, a control signal line or the like. The system transmission line 106 connects the processor 101 to the other parts and transmits a data signal sent and received between the processor 101 and the other parts.

In the holding server 10, a computer is formed by connecting the processor 101 to the main memory 102, the auxiliary memory device 103, the timepiece 104, and the communication interface 105 via the system transmission line 106.

The processor 101 controls each part in order to implement various functions of the holding server 10 according to an operating system or an application program. The processor 101 is, for example, a CPU. The processor 101 can be a multi-core processor that includes a plurality of processor cores and can execute a plurality of processes in parallel.

The main memory 102 includes a nonvolatile memory area and a volatile memory area. The main memory 102 stores an operating system or an application program in the nonvolatile memory area. In some cases, the main memory 102 may store data necessary for the processor 101 to execute processing to control each part, in the nonvolatile or volatile memory area. The volatile memory area in the main memory 102 is used as a work area where the processor 101 rewrites data as appropriate. The nonvolatile memory area is, for example, a ROM. The volatile memory area is, for example, a RAM.

For example, an EEPROM, an HDD, or an SSD or the like can be the auxiliary memory device 103. The auxiliary memory device 103 stores data used by the processor 101 to execute various processing and data generated by the processor 101 through processing, or the like. In some cases, the auxiliary memory device 103 may store the application program.

The timepiece 104 tracks date and time. The processor 101 processes the date and time tracked by the timepiece 104, as the current date and time.

The communication interface 105 is an interface for performing data communication with the transaction processing device 30 and the settlement device 40 connected to the communication network 60.

In the holding server 10 of such a configuration, a part of the memory area in the auxiliary memory device 103 serves as lane-specific folders 1031. The lane-specific folders 1031 are data folders prepared in a number corresponding to the number of the settlement lanes L and identified by the lane numbers of the corresponding settlement lanes L, respectively. The lane-specific folder 1031 is an area for storing (holding), a transaction file output from the transaction processing device 30 in the corresponding settlement lane L. The holding server 10 stores a transaction file (information about a transaction with a customer) in a lane-specific folder 1031 matching the lane number of the settlement lane L of the transaction processing device 30 than sent the transaction file. The holding server 10 can be referred to as a holding device.

In some examples, the holding server 10 may have employee-specific folders instead of the lane-specific folders 1031. The employee-specific folders are data folders prepared in a number corresponding to the number of store clerks that can be operators of the input device 20 and identified by the employee codes of the corresponding employees, respectively. The holding server 10 thus stores a transaction file (information about a transaction with a customer) in the employee-specific folder identified by the employee code of the store clerk who signs in to the transaction processing device 30 that output/sent the transaction file.

### Description of Configuration of Instruction Device

FIG. 6 is a block diagram of the instruction device 50. As illustrated, the instruction device 50 has a processor 501, a main memory 502, an auxiliary memory device 503, a communication interface 504, a fifth touch panel 505, and a system transmission line 506 or the like. The system transmission line 506 includes an address bus, a data bus, a control signal line or the like. The system transmission line 506 connects the processor 501 to the other parts and transmits a data signal sent and received between the processor 501 and the other parts.

In the instruction device 50, a computer is formed by connecting the processor 501 to the main memory 502, the auxiliary memory device 503, and the communication interface 504 via the system transmission line 506. In the instruction device 50, the fifth touch panel 505 is connected to the computer via the system transmission line 506. The device provided in the instruction device 50 is not limited to the fifth touch panel 505. The instruction device 50 may also have a keyboard, a pointing device, a barcode scanner, a camera, or the like.

The processor 501 controls each part in order to implement various functions of the instruction device 50 according to an operating system or an application program. The processor 501 is, for example, a CPU.

The main memory 502 includes a nonvolatile memory area and a volatile memory area. The main memory 502 stores an operating system or an application program in the nonvolatile memory area. In some cases, the main memory 502 may store data necessary for the processor 501 to execute processing to control each part, in the nonvolatile or volatile memory area. The volatile memory area in the main memory 502 is used as a work area where the processor 501 rewrites data as appropriate. The nonvolatile memory area is, for example, a ROM. The volatile memory area is, for example, a RAM.

For example, an EEPROM, an HDD**,** or an SSD or the like can be the auxiliary memory device 503. The auxiliary memory device 503 stores data used by the processor 501 to execute various processing and data generated by the processor 501 through processing, or the like. In some cases, the auxiliary memory device 503 may store the application program.

The communication interface 504 is an interface for performing data communication with the settlement device 40 connected to the communication network 60.

In the instruction device 50, a call button is displayed on the fifth touch panel 505. The call button is a software key. The call button is a first operator that gives an instruction to transmit a transaction file to the settlement device 40 when pressed/selected. Pressing/selecting of the call button is normally disabled. For example, the call button is grayed out and therefore unable to be operated. Upon receiving a signal indicating that an instruction should be enabled from the holding server 10, the instruction device 50 turns the call button into a selectable state and thus enables the operation of the call button. If the enabled call button is pressed (operated), a transaction file held in the holding server 10 is transmitted to the settlement device 40 and stored in the third file area FLc. As a transaction file is stored in the third file area FLc in this way, the customer whose information is stored in this transaction file can operate the settlement device 40 by self-service to pay and thus can settle the transaction.

### Description of Operations of Transaction Processing System

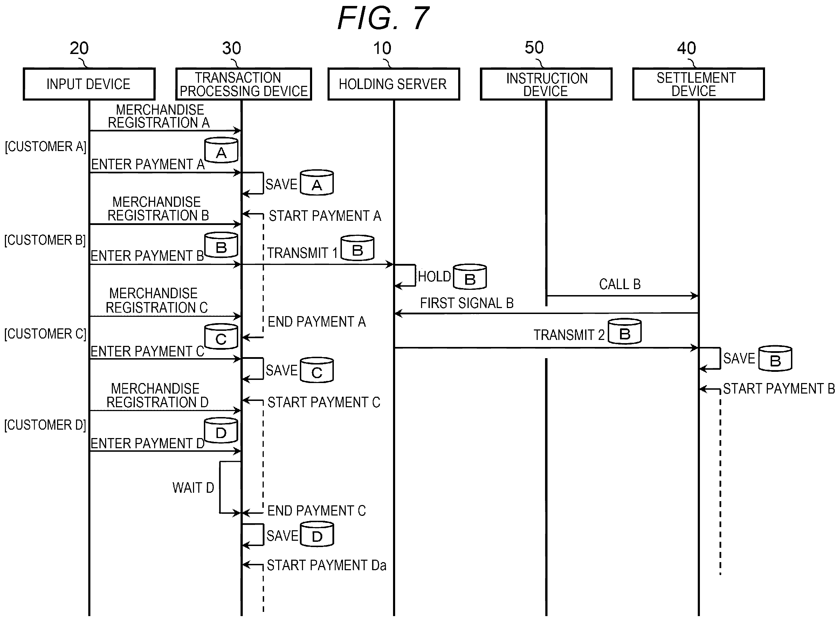

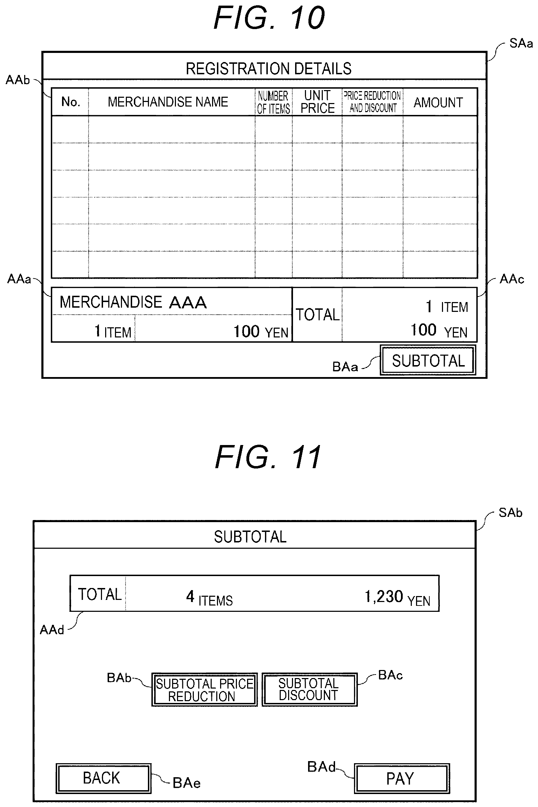

Basic operations of the transaction processing system 100 will now be described using the sequence charts shown in FIGS. 7 to 9 and the image examples shown in FIGS. 10 to 12.

A customer A, walking around the selling area and collecting a merchandise item to be purchased, moves to the payment area. The customer A then places the merchandise item to be purchased on the checkout counter 80 in an available settlement lane L. The store clerk standing in the space SP starts a transaction with the customer A as the customer A comes to the payment area. The store clerk gives a command to start registration. For example, the store clerk touches a start button displayed on the first touch panel 23. This operation serves as a command to start registration. In response to this command, a registration image SAa (see FIG. 10) is displayed on the first touch panel 23.

FIG. 10 shows an example of the registration image SAa. The registration image SAa is divided into a current area AAa, a details area AAb, and a total area AAc. The current area AAa is for displaying the merchandise name, the number of items to be purchased, and the amount of sales, of the latest merchandise item to be purchased. The details area AAb is for displaying the merchandise name, the number of items to be purchased, the unit price, the amount of price reduction and discount, and the amount of sales, of merchandise items to be purchased in one transaction, in the form of a list in order of a series of numbers. The total area AAc is for displaying the total of the numbers of items to be purchased and the total of the amounts of sales, of merchandise items to be purchased in one transaction. The registration image SAa includes a subtotal button BAa. The subtotal button BAa is a software key. The subtotal button BAa is an operator to give a command to output the subtotal of merchandise items to be purchased that are registered as one transaction.

The store clerk checking the registration image SAa registers the merchandise item to be purchased, placed on the checkout counter 80. That is, the store clerk causes the stationary scanner 21 or the handheld scanner 22 of the input device 20 to scan a barcode attached to the merchandise item to be purchased. As the barcode is scanned, the merchandise code of the merchandise item to be purchased is inputted to the transaction processing device 30 via the input device interface 311. If no barcode is attached to the merchandise item to be purchased, the store clerk causes the first touch panel 23 of the input device 20 to display a list of merchandise items with no barcode. The store clerk selects a merchandise item to be purchased from the list. By such an operation, the merchandise code of the merchandise item to be purchased with no barcode is inputted to the transaction processing device 30 via the input device interface 311.

As the merchandise item to be purchased by the customer A is registered at the input device 20 ("merchandise registration A" in FIG. 7), the transaction processing device 30 processes merchandise sales data. This processing is the processing of reading the merchandise name, the unit price, and the like of the merchandise item specified by the inputted merchandise code, from the merchandise master, and generating merchandise sales data of the merchandise item to be purchased, including the merchandise code, the merchandise name, the unit price, the number of items to be purchased, and the amount of sales. The transaction processing device 30 stores the merchandise sales data in a transaction file A generated in the first file area FLa. The transaction file A is a data file for storing information about the merchandise item to be purchased by the customer A.

Every time a merchandise item to be purchased by the customer A is registered, the transaction processing device 30 repeats the processing of generating merchandise sales data and storing the merchandise sales data in the transaction file A. Upon finishing the registration of the merchandise item to be purchased, the store clerk touches the subtotal button BAa. As the subtotal button BAa is touched, the image displayed on the first touch panel 23 shifts from the registration image SAa to a subtotal image SAb (see FIG. 11).

FIG. 11 shows an example of the subtotal image SAb. The subtotal image SAb includes a total area AAd where the total of the numbers of items to be purchased and the total of the amounts of sales, of merchandise items to be purchased in one transaction. The subtotal image SAb also includes a subtotal price reduction button BAb, a subtotal discount button BAc, a payment button BAd, and a back button BAe. The buttons BAb, BAc, BAd, BAe are software keys. The subtotal price reduction button BAb is an operator for giving a command to make a price reduction from the total amount. The subtotal discount button BAc is an operator for giving a command to make a discount from the total amount. A price reduction from the total amount can be made by pressing the subtotal price reduction button BAb and then entering the amount of price reduction via a numeric keypad on the keyboard 24. Similarly, a discount from the total amount may be made by pressing the subtotal discount button BAc and entering a discount rate via the numeric keypad on the keyboard 24. The payment button BAd is an operator for giving a command to finish (complete) the registration of the merchandise items and shift to the payment of the transaction price. The back button BAe is an operator for giving a command to return to the registration of merchandise items.

The store clerk checking the subtotal image SAb presses the payment button BAd ("enter payment A" in FIG. 7). The transaction processing device 30 determines whether the settlement of the transaction is available at this point. When settlement of the transaction is available, the transaction processing device 30 saves the transaction file A in the second file area FLb ("save [A]" in FIG. 7). The customer A moves to the place where the transaction processing device 30 is installed, and starts the paying the price ("start payment A" in FIG. 7).

Once the customer A moves to the place where the transaction processing device 30 is installed, transaction processing for the next customer B becomes available. When a merchandise item to be purchased by the customer B is placed on the checkout counter 80, the store clerk starts the transaction with the customer B. The store clerk operates the input device 20 to register the merchandise item to be purchased by the customer B. As the merchandise item to be purchased by the customer B is registered at the input device 20 ("merchandise registration B" in FIG. 7), the transaction processing device 30 generates merchandise sales data and stores the merchandise sales data in a transaction file B generated in the first file area FLa. The transaction file B is a data file for storing information about the merchandise item to be purchased by the customer B.

Every time a merchandise item to be purchased by the customer B is registered, the transaction processing device 30 repeats the processing of generating merchandise sales data and storing the merchandise sales data in the transaction file B. Upon finishing the registration of the merchandise item to be purchased, the store clerk touches the subtotal button BAa. As the subtotal button BAa is touched, the image displayed on the first touch panel 23 shifts from the registration image SAa to the subtotal image SAb.

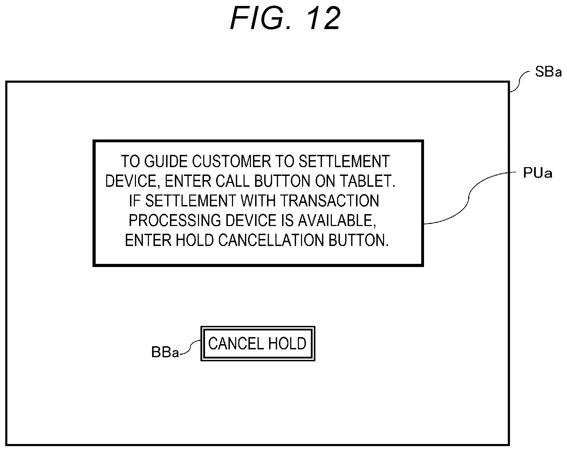

The store clerk checks the subtotal image SAb and then presses the payment button BAd ("enter payment B" in FIG. 7). The transaction processing device 30 determines whether the settlement of the transaction is available. At this point, if the customer Ais yet to complete the payment of the price, the transaction processing device 30 cannot perform the settlement of the transaction. The transaction processing device 30 transmits the transaction file B to the holding server 10 ("transmit 1 [B]" in FIG. 7). The holding server 10 saves the transaction file B ("hold [B]" in FIG. 7). As the transaction file B is transmitted to the holding server 10, the entry of the call button displayed on the fifth touch panel 505 of the instruction device 50 is enabled. Also, a guidance image SBa (see FIG. 12) is displayed on the second touch panel 32.

FIG. 12 shows an example of the guidance image SBa. The guidance image SBa shows a popup PUa including a guidance in the case of guiding the customer to the settlement device 40 and a guidance in the case of using the transaction processing device 30 as the device for the settlement, and a hold cancellation button BBa. The hold cancellation button BBa is a second operator that cancels the holding of the transaction file in the holding server 10 and gives an instruction to transmit the transaction file to the transaction processing device 30.

The store clerk checking the guidance image SBa decides the device for the payment of the price of the customer whose transaction file is held in the holding server 10. For example, if another customer is paying the price at the transaction processing device 30 but no customer is paying the price at the settlement device 40, the store clerk decides the settlement device 40 to be the device for the payment of the price. For example, if another customer is still paying the price at the settlement device 40 but the customer paying the price at the transaction processing device 30 finishes the payment, the store clerk decides the transaction processing device 30 to be the device for the payment of the price.

At this point, the customer A is yet to complete the payment of the price and therefore the store clerk touches the call button on the instruction device 50 ("call B" in FIG. 7). As the call button is touched, a first signal is transmitted from the settlement device 40 to the holding server 10 ("first signal B" in FIG. 7). In response to this first signal, the transaction file B is transmitted from the holding server 10 to the settlement device 40 ("transmit 2 [B]" in FIG. 7). The settlement device 40 saves the transaction file B in the third file area FLc ("save [B]" in FIG. 7). The customer B moves to the place where the settlement device 40 is installed, and starts the payment of the price ("start payment B" in FIG. 7).

As the customer B moves to the place where the settlement device 40 is installed, a transaction with the next customer C becomes available. When a merchandise item to be purchased by the customer C is placed on the checkout counter 80, the store clerk starts the transaction with the customer C. The store clerk operates the input device 20 to register the merchandise item to be purchased by the customer C. As the merchandise item to be purchased by the customer C is registered at the input device 20 ("merchandise registration C" in FIG. 7), the transaction processing device 30 generates merchandise sales data and stores the merchandise sales data in a transaction file C generated in the first file area FLa. The transaction file C is a data file for storing information about the merchandise item to be purchased by the customer C.

Every time a merchandise item to be purchased by the customer C is registered, the transaction processing device 30 repeats the processing of generating merchandise sales data and storing the merchandise sales data in the transaction file C. Upon finishing the registration of the merchandise item to be purchased, the store clerk touches the subtotal button BAa. As the subtotal button BAa is touched, the image displayed on the first touch panel 23 shifts from the registration image SAa to the subtotal image SAb.

The store clerk checks the subtotal image SAb and presses the payment button BAd ("enter payment C" in FIG. 7). The transaction processing device 30 determines whether the settlement of the transaction is available. At this point, if the payment of the price by the customer A is complete ("end payment A" in FIG. 7), the transaction processing device 30 saves the transaction file C in the second file area FLb ("save [C]" in FIG. 7). The customer C moves to the place where the transaction processing device 30 is installed, and starts the payment of the price ("start payment C" in FIG. 7).

As the customer C moves to the place where the transaction processing device 30 is installed, a transaction with the next customer D becomes available. When a merchandise item to be purchased by the customer D is placed on the checkout counter 80, the store clerk starts the transaction with the customer D. The store clerk operates the input device 20 to register the merchandise item to be purchased by the customer D. As the merchandise item to be purchased by the customer D is registered at the input device 20 ("merchandise registration D" in FIG. 7), the transaction processing device 30 generates merchandise sales data and stores the merchandise sales data in a transaction file D generated in the first file area FLa. The transaction file D is a data file for storing information about the merchandise item to be purchased by the customer D.

Every time a merchandise item to be purchased by the customer D is registered, the transaction processing device 30 repeats the processing of generating merchandise sales data and storing the merchandise sales data in the transaction file D. Upon finishing the registration of the merchandise item to be purchased, the store clerk touches the subtotal button BAa. As the subtotal button BAa is touched, the image displayed on the first touch panel 23 shifts from the registration image SAa to the subtotal image SAb.

The store clerk checks the subtotal image SAb and presses the pay button BAd ("enter payment D" in FIG. 7). The transaction processing device 30 determines whether the settlement of the transaction is available. At this point, if both the customer B and the customer C are yet to complete the payment of the price, information indicating that the payment is unavailable is displayed on the first touch panel 23 and the display 25 of the input device 20. The customer D waits until the payment is available ("wait D" in FIG. 7).

If the customer C completes the payment first as shown in FIG. 7 ("end payment C" in FIG. 7), the transaction processing device 30 saves the transaction file D in the second file area FLb ("save [D]" in FIG. 7). The customer D moves to the place where the transaction processing device 30 is installed, and starts the payment of the price ("start payment Da" in FIG. 7).

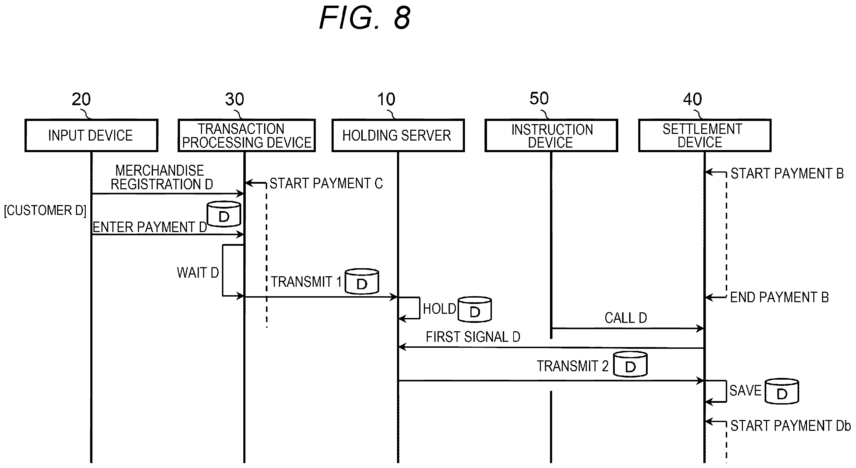

If the customer B completes the payment first as shown in FIG. 8 ("end payment B" in FIG. 8), the transaction processing device 30 transmits the transaction file D to the holding server 10 ("transmit 1 [D]" in FIG. 8). The holding server 10 saves the transaction file D ("hold [D]" in FIG. 8). Also, since the call button displayed on the fifth touch panel 505 of the instruction device 50 is enabled, the store clerk touches the call button ("call D" in FIG. 8). As the call button is touched, a first signal is transmitted from the settlement device 40 to the holding server 10 ("first signal D" in FIG. 8). In response to this first signal, the transaction file D is transmitted from the holding server 10 to the settlement device 40 ("transmit 2 [D]" in FIG. 8). The settlement device 40 saves the transaction file D in the third file area FLc ("save [D]" in FIG. 8). The customer D moves to the place where the settlement device 40 is installed, and starts the payment of the price ("start payment Db" in FIG. 8).

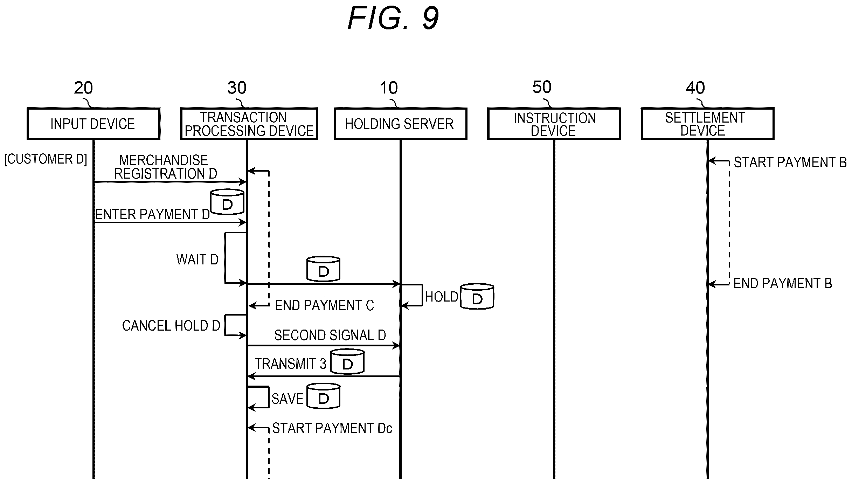

In contrast, if, as shown in FIG. 9, the customer B completes the payment first ("end payment B" in FIG. 9) but the customer C completes the payment immediately after and the transaction processing device 30 becomes available ("end payment C" in FIG. 9), the store clerk may select the hold cancellation button BBa displayed on the second touch panel 32. When the hold cancellation button BBa is pressed ("cancel hold D" in FIG. 9), a second signal is transmitted from the transaction processing device 30 to the holding server 10 ("second signal D" in FIG. 9). In response to this second signal, the transaction file D is transmitted from the holding server 10 to the transaction processing device 30 ("transmit 3 [D]" in FIG. 9). The transaction processing device 30 saves the transaction file D in the second file area FLb ("save [D]" in FIG. 9). The customer D moves to the place where the transaction processing device 30 is installed, and starts the payment of the transaction price ("start payment Dc" in FIG. 9).

In this way, in the transaction processing system 100, the transaction processing device 30 and the settlement device 40 can be suitably selected, and the system can thus efficiently deal with many customers. Also, since the customer himself or herself carries out the operation related to the payment of the price, the reduction in labor costs can be achieved. Moreover, since the store clerk does not touch cash, a cash card or the like, the system can achieve an excellent effect in terms of measures against infectious diseases.

### Description of Self-Service Operation Assistance Function

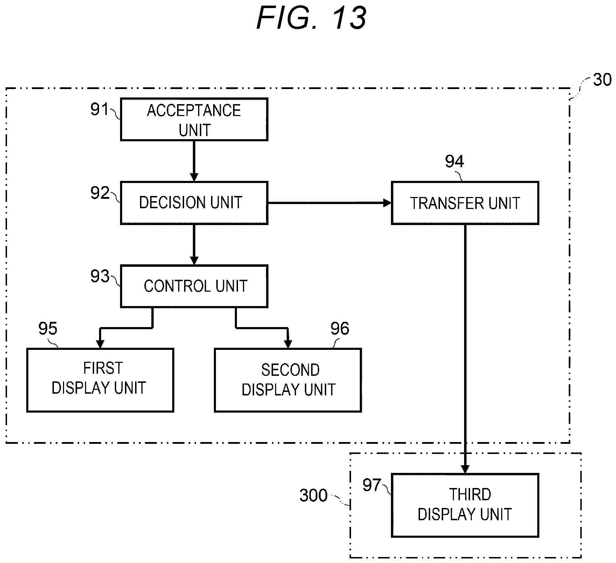

In the transaction processing system 100, since the customer himself or herself carries out the operations related to the payment of the transaction price, the customer may, in some cases, have a hard time carrying out the operation related to the depositing of money and therefore it may take long until the transaction is settled. In order to cope with such trouble, the transaction processing device 30 has a self-service operation assistance function with the store clerk. This function permits the store clerk to assist the customer operating, by self-service, the third touch panel 33, the automatic change machine 35, the cashless settlement terminal 36 or the like of the transaction processing device 30. The store clerk may also similarly assist a customer operating the fourth touch panel 41, the automatic change machine 43, the cashless settlement terminal 44 or the like of the settlement device 40. The self-service operation assistance function of the transaction processing device 30 will now be described, using FIGS. 13 to 23.

FIG. 13 shows a configuration associated with the self-service operation assistance function. The transaction processing device 30 provides an acceptance unit 91, a decision unit 92, a control unit 93, and a transfer unit 94 in order to implement the self-service operation assistance function.

The acceptance unit 91 accepts an assistance request from the customer performing an input operation via a first display unit 95. The first display unit 95 displays a first image to accept an input operation by the customer. That is, for the transaction processing device 30, the first display unit 95 is the third touch panel 33. For the settlement device 40, the first display unit 95 is the fourth touch panel 41.

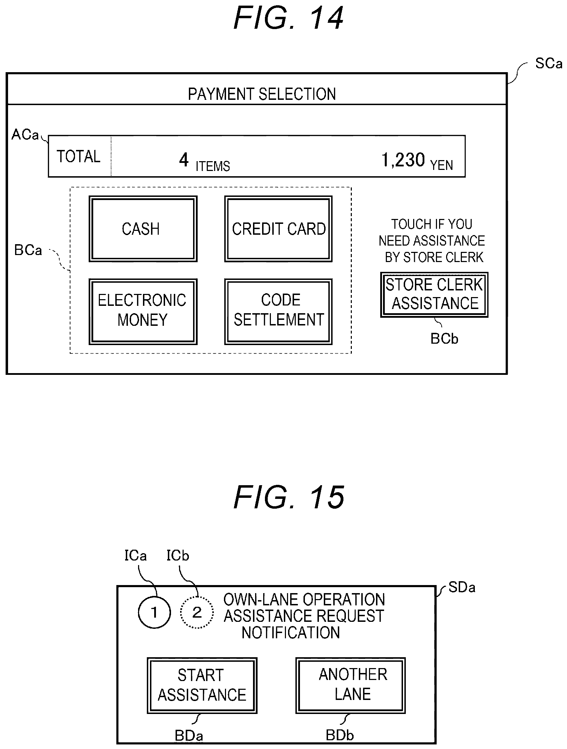

The first display unit 95 displays an operator (e.g., button or icon) to accept an assistance request received from the customer. For example, if a transaction file is saved in the second file area FLb, the transaction processing device 30 changes the image displayed on the third touch panel 33 to a payment method selection image SCa (see FIG. 14). If a transaction file is saved in the third file area FLc, the settlement device 40 changes the image displayed on the fourth touch panel 41 to the payment method selection image SCa.

FIG. 14 shows an example of the payment method selection image SCa. In the payment method selection image SCa, a total area ACa where the total of the numbers of items to be purchased and the total of the amounts of sales, of merchandise items to be purchased in one transaction, are displayed, a selection button group BCa including buttons corresponding to individual payment methods, and a store clerk assistance button BCb, are arranged. The individual buttons of the selection button group BCa and the store clerk assistance button BCb are all software keys.

The selection button group BCa includes a cash button, a credit card button, an electronic money button, and a code settlement button. The cash button is a button to give a command for cash payment. The credit card button is a button to give a command for credit card payment. The electronic money button is a button to give a command for electronic money payment. The code settlement button is a button to give a command for code settlement payment. The buttons included in the selection button group BCa are not limited to the cash button, the credit card button, the electronic money button, and the code settlement button. For example, a point button to give a command for point payment may be added. Alternatively, at least one of the cash button, the credit card button, the electronic money button, and the code settlement button may be omitted.

The store clerk assistance button BCb is an operator to accept an assistance request from a customer. A customer having a question or concern about the self-service operation related to the depositing of money with the transaction processing device 30 or the settlement device 40 and needs assistance from the store clerk touches the store clerk assistance button BCb. The acceptance unit 91 accepts the touch input on the store clerk assistance button BCb as an assistance request by the customer.

The decision unit 92 determines whether to approve the assistance request accepted by the acceptance unit 91. If the store clerk assistance button BCb displayed by the first display unit 95 is pressed, the decision unit 92 displays an assistance request notification image SDa (see FIG. 15) on a second display unit 96. The second display unit 96 displays a second image to accept an input operation by the store clerk. That is, in the transaction processing device 30, the second display unit 96 is the second touch panel 32. The second display unit 96 may also be the first touch panel 23 in the input device 20.

FIG. 15 shows an example of the assistance request notification image SDa. The assistance request notification image SDa is displayed as a popup superimposed on the image displayed by the second display unit 96. For example, if the store clerk assistance button BCb is pressed while the registration image SAa is displayed on the first touch panel 23, the assistance request notification image SDa may be displayed as a popup superimposed on the registration image SAa.

In the assistance request notification image SDa, an assistance start button BDa and an another lane button BDb are arranged. The assistance request notification image SDa includes a first icon ICa that lights up if the store clerk assistance button BCb on the third touch panel 33 is entered, and a second icon ICb that lights up if the store clerk assistance button BCb on the fourth touch panel 41 is pressed. As the assistance request notification image SDa is displayed by the second display unit 96, the store clerk present in the space SP can learn that the customer is requesting assistance with the operation related to the depositing of money. At this point, if the first icon ICa lights up, the store clerk can recognize that it is an assistance request by the customer performing the self-service operation of the transaction processing device 30 to pay. If the second icon ICb lights up, the store clerk can recognize that it is an assistance request by the customer performing the self-service operation of the settlement device 40 to pay. To accept the assistance request, the store clerk touches the assistance start button BDa. If the store clerk cannot accept the assistance request, the store clerk touches the another lane button BDb.

The decision unit 92 approves the assistance request accepted by the acceptance unit 91 if the assistance start button BDa is selected by a touch or the like. The decision unit 92 does not approve the assistance request if the another lane button BDb is selected by a touch or the like.

The control unit 93 causes the second display unit 96 to display the second image with the same content as the first image displayed by the first display unit 95, if the decision unit 92 decides to approve the assistance request. The control unit 93 then accepts an input operation by the store clerk performed on the second image being displayed by the second display unit 96. At this point, the control unit 93 will not accept any input operation via the first image displayed by the first display unit 95. The control unit 93 causes the first display unit 95 to display the trajectory of the input operation performed by the store clerk via the second image. That is, the control unit 93 causes the first display unit 95 to indicate on the first image which operation (input) the store clerk has just performed on second display unit 96. With such functions of the control unit 93, the second display unit 96 can display a second image having the same content (information) as the first image being displayed by the first display unit 95. The second image is an image provided to accept an input operation performed by the store clerk as operation guidance, help, assistance, or the like for the customer. When the store clerk performs an input operation on the second image, the operation is reflected and indicated on the first image being displayed by the first display unit 95. Thus, by checking the first display unit 95, the customer who pressed the store clerk assistance button BCb can learn the necessary procedures for the self-service operation related to the depositing of money, about which the customer previously had a question or concern.

The transfer unit 94 transfers the assistance request to another device 300 having a third display unit 97 equivalent to the second display unit 96, if the decision unit 92 decides not to approve the assistance request. As the other device 300, a transaction processing device 30 installed in another settlement lane is conceivable. Alternatively, the other device 300 may be an electronic device such as a POS terminal installed at a customer service counter or the like. If the assistance request is transferred to another device 300, the operator of the other device 300, instead of the store clerk present in the space SP, can assist the self-service operation of the customer.

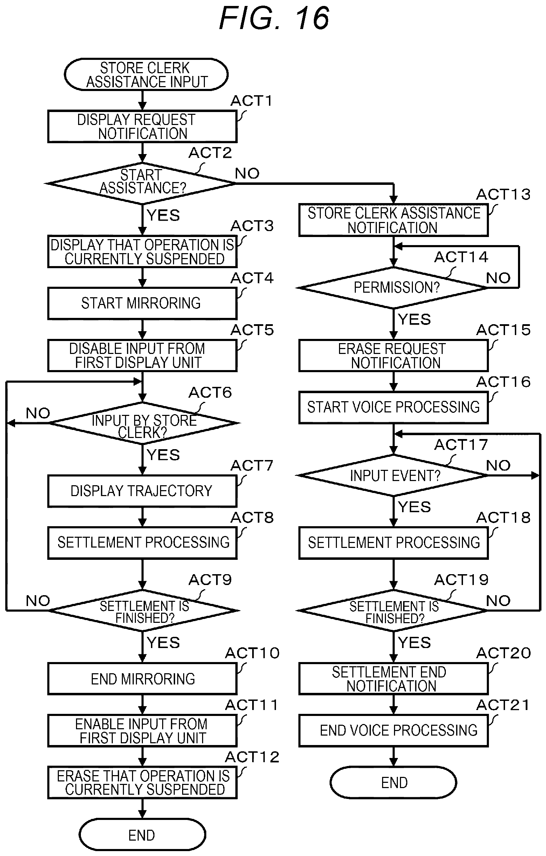

FIG. 16 is a flowchart showing aspects of procedures of information processing executed by the processor 301 of the transaction processing device 30 in connection with the self-service operation assistance function. The processor 301 executes the above information processing according to an assistance program. The assistance program is a kind of application program stored in the main memory 302 or the auxiliary memory device 303. The method for installing the assistance program in the main memory 302 or the auxiliary memory device 303 is not particularly limited. The assistance program can be recorded in a removable recording medium or distributed by communication via a network, and thus can be installed in the main memory 302 or the auxiliary memory device 303. The recording medium may be in any form that can store a program and is readable by a device, such as a CD-ROM or a memory card.

The customer who needs assistance from the store clerk due to a question or concern about the self-service operation related to the depositing of money or the like at the transaction processing device 30 or the settlement device 40 touches the store clerk assistance button BCb. When the store clerk assistance button BCb displayed by the first display unit 95 (e.g., the third touch panel 33 or the fourth touch panel 41) is pressed, the processor 301 starts the information processing according to the procedures shown in the flowchart of FIG. 16.

In ACT 1, the processor 301 causes the assistance request notification image SDa to be displayed on the first touch panel 23 or the second touch panel 32. Then, in ACT 2, the processor 301 waits until the assistance start button BDa is pressed or until the another lane button BDb is pressed. The store clerk checking the assistance request notification image SDa touches the assistance start button BDa if operation assistance is available. The store clerk touches the another lane button BDb if the operation assistance is unavailable.

If the assistance start button BDa is selected in the waiting state of ACT 2, the processor 301 proceeds to ACT 3. In ACT 3, the processor 301 causes the display 25 to display first information indicating that the registration operation is currently suspended. The first information may be a text or an illustration. The customer standing in the pathway PA still yet to perform merchandise registration or currently performing merchandise registration can recognize that the registration operation for the merchandise item has been suspended based on the first information displayed on the display 25.

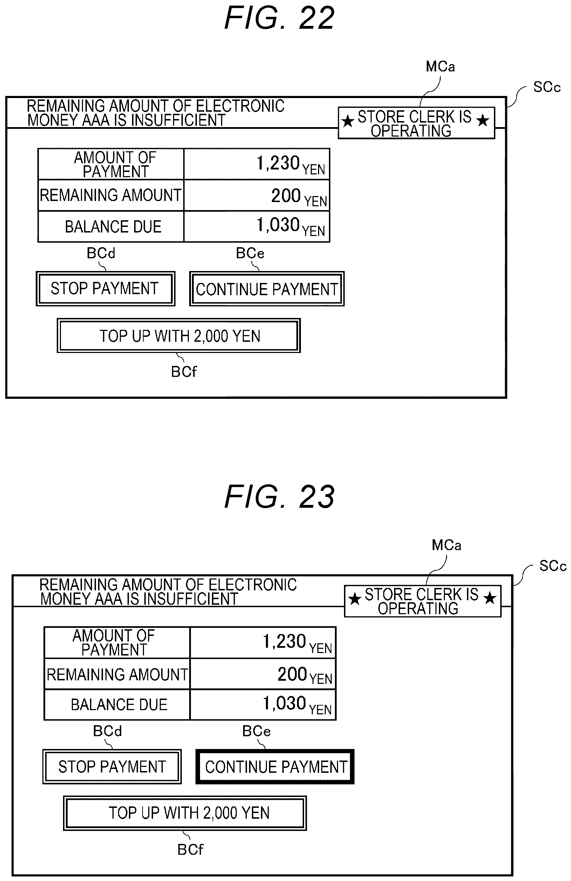

In ACT 4, the processor 301 starts mirroring. That is, the processor 301 causes the second display unit 96 (e.g., the second touch panel 32) to display the second image of the same content as the first image displayed by the first display unit 95 (e.g., the third touch panel 33 or the fourth touch panel 41). In ACT 5, the processor 301 is set not to accept an input from the first display unit 95. For example, the processor 301 disables an input signal from the first display unit 95. At this point, the processor 301 causes the first display unit 95 to display second information indicating that the store clerk is operating/controlling. The second information is, for example, information MCa such as "store clerk is operating" in an image example shown in FIG. 22 or FIG. 23. The customer touching the store clerk assistance button BCb can learn that the operation assistance request is accepted, based on the second information MCa displayed by the first display unit 95 (e.g., the third touch panel 33 or the fourth touch panel 41).

Upon finishing the processing of ACTS 3 to 5, the processor 301 proceeds to ACT 6. In ACT 6, the processor 301 waits for an input operation on the second display unit 96 (e.g., the second touch panel 32).

The store clerk, upon touching the assistance start button BDa in the assistance request notification image SDa where the first icon ICa lights up, checks the question or concern about the operation with the customer performing the self-service operation with the transaction processing device 30. The store clerk, upon touching the assistance start button BDa in the assistance request notification image SDa where the second icon ICb lights up, checks the question or concern about the operation with the customer performing the self-service operation with the settlement device 40. At this point, on the second display unit (the second touch panel 32) 96, the second image with the same content as the first image displayed by the first display unit 95 (e.g., the third touch panel 33 or the fourth touch panel 41) when the customer presses the store clerk assistance button BCb is displayed. Thus, the store clerk, in place of the customer, performs the operations related to the depositing of money via the second display unit 96 (e.g., the second touch panel 32).

Upon accepting the input on the second display unit 96, the processor 301 proceeds to ACT 7. In ACT 7, the processor 301 causes the first display unit 95 to display the trajectory of the accepted input. That is, the processor 301 causes the first display unit 95 to provide operation guidance (or "an operation trajectory") to indicate the input just made via the second display unit 96. For example, the processor 301 highlights the button in the first image corresponding to the button in the second image just touched by the store clerk. The highlighting method is not particularly limited. For example, the frame of the touched button is surrounded by a different color from the other buttons and thus highlighted. For example, the touched button may be made to flash on and off and thus highlighted. As an indicator corresponding to the store clerk's input operation is displayed to the customer, the customer can learn, in real time, which button was just operated by the store clerk.

In ACT 8, the processor 301 executes settlement processing corresponding to the input operation. For example, if the cash button in the selection button group BCa in the payment method selection image SCa is selected, the processor 301 executes cash settlement processing to settle the transaction with the cash inserted in the automatic change machine 35 or the automatic change machine 43. For example, if the credit card button in the selection button group BCa in the payment method selection image SCa is selected, the processor 301 executes credit card settlement processing to settle the transaction with the credit card read by the cashless settlement terminal 36 or the cashless settlement terminal 44. For example, if the electronic money button in the selection button group BCa in the payment method selection image SCa is selected, the processor 301 executes electronic money settlement processing to settle the transaction with the electronic money information read by the cashless settlement terminal 36 or the cashless settlement terminal 44. For example, if the code settlement button in the selection button group BCa in the payment method selection image SCa is selected, the processor 301 executes code settlement processing to settle the transaction with the data from a barcode or two-dimensional code read at the cashless settlement terminal 36 or the cashless settlement terminal 44.

In ACT 9, the processor 301 determines whether the settlement processing is finished. If the settlement processing is not finished, the processor 301 returns to ACT 6. The processor 301 then repeatedly executes the processing of ACTS 6 to 9.

If the settlement processing is finished in ACT 9, the processor 301 proceeds to ACT 10. In ACT 10, the processor 301 ends the mirroring. That is, the processor 301 erases the second image displayed by the second display unit (the second touch panel 32) 96. The processor 301 returns the image on the second display unit (the second touch panel 32) 96 to the state before the start of the mirroring. In ACT 11, the processor 301 is set to accept an input from the first display unit (the third touch panel 33 or the fourth touch panel 41) 95. For example, the processor 301 enables an input signal from the first display unit (the third touch panel 33 or the fourth touch panel 41) 95. At this point, the processor 301 erases the second information MCa displayed by the first display unit (the third touch panel 33 or the fourth touch panel 41) 95. Also, in ACT 12, the processor 301 erases the first information displayed on the display 25. Thus, the processor 301 ends the information processing in the case where the assistance start button BDa is selected in ACT 2.

However, if the another lane button BDb is selected in the waiting state of ACT 2, the processor 301 proceeds to ACT 13. In ACT 13, the processor 301 transmits a store clerk assistance notification event to another device 300 connected to the communication network 60. If a plurality of other devices 300 are connected to the communication network 60, the processor 301 may transmit the store clerk assistance notification event to the plurality of other devices 300 in parallel.

A permission response signal may be sent back from another device 300 receiving the store clerk assistance notification event. In ACT 14, the processor 301 waits for the permission response signal. Upon receiving the permission response signal from another device 300 via the communication network 60, the processor 301 proceeds to ACT 15. In ACT 15, the processor 301 erases the assistance request notification image SDa displayed on the first touch panel 23 or the second touch panel 32.

In ACT 16, the processor 301 instructs the voice processing circuit 310 to start voice processing. In response to this instruction, the voice processing circuit 310 is activated. As the voice processing circuit 310 is activated, the customer operating the store clerk assistance button BCb can talk to the operator of the other device 300 who is wearing a headset, using the microphone and the speaker provided near the third touch panel 33. Through this talking, the customer can inform the operator of the other device 300 of a question or concern about the operations.

In ACT 17, the processor 301 waits for an input event from the other device 300. The input event is an event in the operations related to the depositing of money. Upon receiving this input event, the processor 301 executes settlement processing corresponding to the event. This settlement processing is similar to the settlement processing described for the processing in ACT 8. In ACT 19, the processor 301 checks whether the settlement processing is finished. If the settlement processing is not finished, the processor 301 returns to ACT 17. The processor 301 then repeatedly executes the processing of ACTS 17 to 19.

When the settlement processing is finished in ACT 19, the processor 301 proceeds to ACT 20. In ACT 20, the processor 301 transmits a settlement end notification event to the other device 300. Also, in ACT 21, the processor 301 instructs the voice processing circuit 310 to end the voice processing. In response to this instruction, the voice processing circuit 310 stops operating. Thus, the processor 301 ends the information processing in the case where the another lane button BDb is selected in ACT 2.

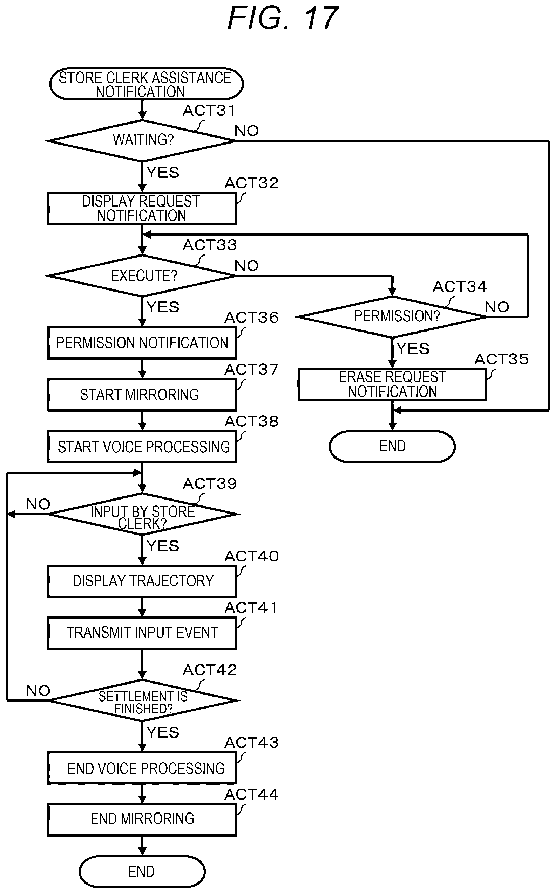

FIG. 17 is a flowchart showing aspects of procedures of information processing executed by the processor of another device 300 that receives the store clerk assistance notification event. In this example, for the sake of convenience of the description, a transaction processing device 30 is employed as the other device 300. In the description below, the transaction processing device 30 receiving the store clerk assistance notification event is referred to as a transaction processing device 300.

Upon receiving the store clerk assistance notification event, the processor 301 of the transaction processing device 300 starts the information processing according to the procedures shown in the flowchart of FIG. 17. In ACT 31, the processor 301 checks whether it is presently a waiting (idle) state. In this context, a waiting state in the transaction processing device 300 is the state where the registration of a merchandise item to be purchased has not yet been started. Once the registration of a merchandise item to be purchased has been started via the input device 20 the waiting state ends (that is, waiting = NO), and the processor 301 disables the store clerk assistance notification event and ends the information processing of FIG. 17.

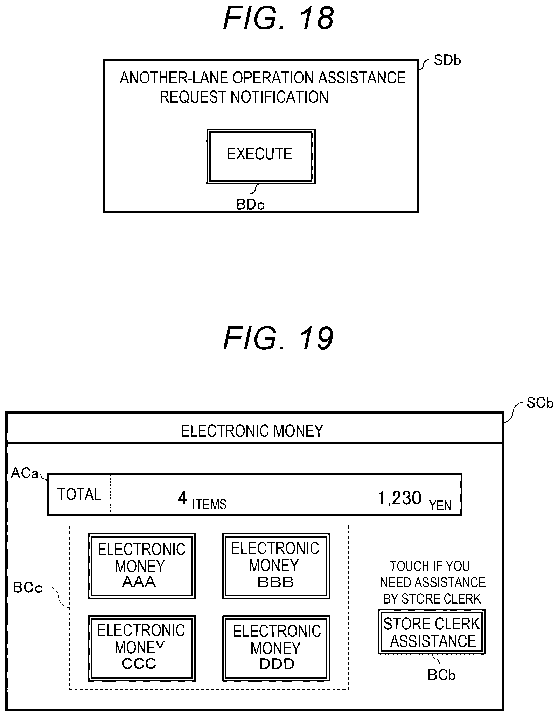

If waiting = YES, the processor 301 proceeds to ACT 32. The processor 301 causes an assistance request notification image SDb (see FIG. 18) to be displayed on the first touch panel 23 or the second touch panel 32.

FIG. 18 shows an example of the assistance request notification image SDb. In the assistance request notification image SDb, an execute button BDc is arranged. Upon checking that the assistance request notification image SDb is displayed, the store clerk who is the operator of another transaction processing device 300 can recognize that an assistance request with the self-service operation is given by a customer in another settlement lane. The store clerk, upon deciding to assist the self-service operation, presses the execute button BDc.

Upon displaying the assistance request notification image SDb, the processor 301 waits until the execute button BDc is pressed in ACT 33 or until a permission notification signal is received in ACT 34. When the execute button BDc is pressed, the processor 301 proceeds to ACT 36. In ACT 36, the processor 301 transmits a permission notification signal to another device.

The other device to which the permission notification signal is transmitted can be another transaction processing device 300 capable of receiving the store clerk assistance notification event. Therefore, if the operator of another transaction processing device 300 presses the execute button BDc first, the transaction processing device 300 receives the permission notification signal. The processor 301 of the transaction processing device 300 receiving the permission notification signal in the waiting state of ACT 33 or ACT 34 proceeds to ACT 35. In ACT 35, the processor 301 erases the assistance request notification image SDb. Thus, the processor 301 ends the information processing in the case where the execute button BDc is not entered.

The processor 301, upon transmitting the permission notification event in ACT 36, proceeds to ACT 37. In ACT 37, the processor 301 starts mirroring. That is, the processor 301 causes the third display unit 97 (e.g., the second touch panel 32) of the transaction processing device 300 to display a third image having the same content as the first image displayed by the first display unit 95 of the transaction processing device 30 that was the source of the store clerk assistance notification event. In ACT 38, the processor 301 instructs the voice processing circuit 310 to start voice processing. In response to this instruction, the voice processing circuit 310 is activated. After the voice processing circuit 310 is activated, the operator pressing the execute button BDc can talk to the assistance requesting customer using the headset. Through this talking, the operator can learn a question or concern about the operations from the customer. At this point, on the third display unit 97, the third image with the same content as the first image displayed by the first display unit 95 when the customer pressed the store clerk assistance button BCb is displayed. Thus, the operator, in place of the customer, performs the operations related to the depositing of money via the third display unit 97.

In ACT 39, the processor 301 waits for an input operation on the third display unit 97. Upon accepting the input on the third display unit 97, the processor 301 proceeds to ACT 40. In ACT 40, the processor 301 causes the first display unit 95 of the transaction processing device 30 to display the operation trajectory of the just accepted operator input. For example, the processor 301 highlights the button in the first image corresponding to the button in the third image just touched by the operator.

In ACT 41, the processor 301 transmits an input event indicating the content of the input on the third display unit 97, to the transaction processing device 30. Then, in ACT 42, the processor 301 checks whether a settlement end notification event is received from the transaction processing device 30. If the settlement end notification event is not yet received, the processor 301 returns to ACT 39. The processor 301 then repeatedly executes the processing of ACTS 39 to 41 until the settlement end notification event is received.

When the settlement end notification event is received, the processor 301 proceeds to ACT 43. In ACT 43, the processor 301 instructs the voice processing circuit 310 to end the voice processing. In response to this instruction, the voice processing circuit 310 stops operating. Also, in ACT 44, the processor 301 ends the mirroring. That is, the processor 301 erases the third image displayed by the third display unit 97. Thus, the processor 301 ends the information processing after the execute button BDc is pressed.

### Description of Action of Self-Service Operation Assistance Function

The action of the self-service operation assistance function will now be described by referring to an example case where a customer performing a self-service operation on the third touch panel 33 of the transaction processing device 30 to pay by electronic money requests operation assistance.

Since the payment method selection image SCa is displayed on the third touch panel 33, the customer can touch the electronic money button upon moving to the transaction processing device 30. Thus, the image on the third touch panel 33 shifts to, for example, an electronic money selection image SCb shown in FIG. 19. The electronic money selection image SCb is an image where a button group BCc for selecting a type of electronic money is arranged. In the electronic money selection image SCb, as in the payment method selection image SCa, the store clerk assistance button BCb is arranged as well.

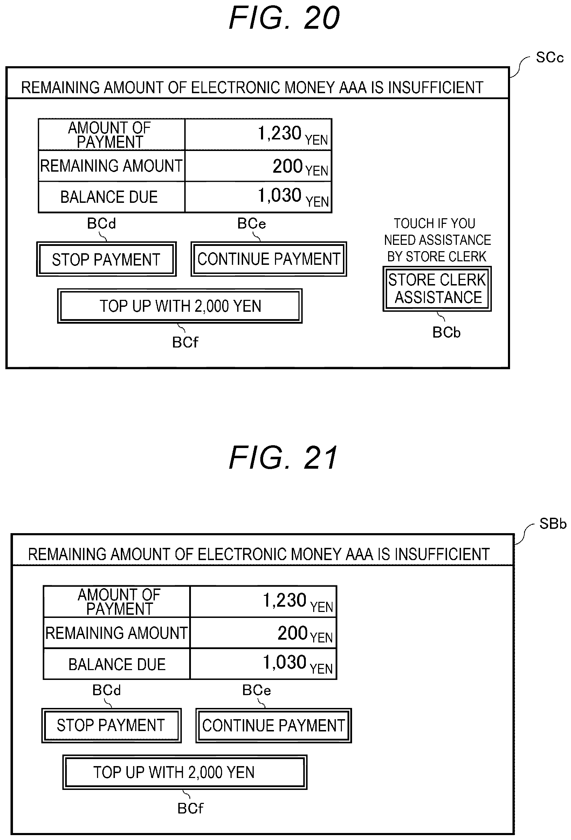

It is now assumed that the customer uses electronic money AAA. The customer touches an "electronic money AAA" button in the button group BCc and holds the electronic money AAA over the cashless settlement terminal 36. At this point, if the remaining amount of the electronic money AAA is insufficient, the image on the third touch panel 33 shifts to, for example, an insufficient balance image SCc shown in FIG. 20. The insufficient balance image SCc shows the amount of payment (1,230 yen), the remaining amount of the electronic money AAA (200 yen), and the balance due (1,030 yen). Also, in the insufficient balance image SCc, three buttons BCd, BCe, BCf to accept an operation by the customer are arranged. Moreover, in the insufficient balance image SCc, as in the payment method selection image SCa and the electronic money selection image SCb, the store clerk assistance button BCb is arranged as well.

The button BCd is a button to accept an instruction to stop the payment by the electronic money. The button BCe is a button to accept an instruction to execute the payment with the remaining amount of the electronic money and pay the balance due by another payment method. The button BCf is a button to accept an instruction to top up the electronic money. In the insufficient balance image SCc, the button BCf to accept the instruction to top up the electronic money is a button to top up with a minimum amount (2,000 yen) equal to or larger than the balance due by a set amount unit, for example, yen in thousands.

It is now assumed that the customer does not know which of the three buttons BCd, BCe, BCf to operate. The customer touches the store clerk assistance button BCb. Thus, the assistance request notification image SDa is displayed on the first touch panel 23 or the second touch panel 32. If the store clerk, upon noticing the assistance request notification image SDa, touches the assistance start button BDa, an insufficient balance image SBb (see FIG. 21) is displayed on the second touch panel 32.

FIG. 21 shows an example of the insufficient balance image SBb displayed on the second touch panel 32. As illustrated, the insufficient balance image SBb is an image of the same content as the insufficient balance image SCc displayed on the third touch panel 33 when the customer touches the store clerk assistance button BCb. However, the store clerk assistance button BCb is not displayed.

In the insufficient balance image SCc displayed on the third touch panel 33, "store clerk is operating" is displayed as the second information MCa as shown in FIG. 22. Then, any operation input on the third touch panel 33 is no longer accepted. Therefore, even if the customer touches an image displayed on the third touch panel 33, the input is disregarded.

The store clerk, upon checking the insufficient balance image SBb, asks the customer whether to stop the payment by the electronic money, pay a part of the price with the remaining amount of the electronic money, or top up the electronic money. If the customer wishes, for example, to pay a part of the price with the remaining amount of the electronic money, the store clerk touches the button BCe in the insufficient balance image SBb. Consequently, the button BCe in the insufficient balance image SCc displayed on the third touch panel 33 is highlighted, as shown in FIG. 23. Thus, the customer can see that the customer can touch the button BCe to pay a part of the price (amount due) with the remaining amount of the electronic money.

If the button BCe is touched, the image displayed on the second touch panel 32 shifts from the insufficient balance image SBb to the payment method selection image SCa. Similarly, the image displayed on the third touch panel 33 shifts from the insufficient balance image SCc to the payment method selection image SCa. The payment method selection image SCa is an image to accept a payment method for the balance due (1,030 yen) as the amount of payment.

It is now assumed that the customer wishes to use cash as the payment method. The store clerk touches the cash button in the payment method selection image SCa displayed on the second touch panel 32. Thus, the cash button in the payment method selection image SCa displayed on the third touch panel 33 is highlighted. The store clerk instructs the customer to insert cash in the automatic change machine 35. Once cash equal to or larger than the balance due is inserted in the automatic change machine 35, the settlement can be finished. The image on the second touch panel 32 returns to the state before the customer pressed the store clerk assistance button BCb.

In this way, the customer having a question or concern about the self-service operation related to the depositing of money can swiftly receive assistance from the store clerk. Therefore, an inconvenience in that the settlement of the transaction takes long because the customer has a hard time performing the self-service operation related to the depositing of money can be prevented. Also, the store clerk can support the customer while staying in the space SP, which is very efficient.

Such advantageous effects may be similarly achieved in the case where the customer performing the self-service operation with the settlement device 40 has a question or concern about the operation thereof. Moreover, even if the store clerk present in the space SP cannot support the customer, a store clerk in another settlement lane or a store clerk at the service counter can remotely support the customer. Thus, the transaction processing device 30 and the transaction processing system 100 enable the store clerks to efficiently assist the self-service operation of the customers.

### Other Embodiments

**In** an embodiment, the acceptance unit 91 is described as the function of accepting a touch entry of the store clerk assistance button BCb as an assistance request from the customer. However, the acceptance unit 91 is not limited to this. For example, a foot switch to step on to supply an assistance request signal to the processor 301 of the transaction processing device 30 may be provided near the transaction processing device 30 or the settlement device 40. The acceptance unit 91 accepts the assistance request signal from this foot switch as an assistance request from a customer. Thus, for example, a customer who cannot perform the self-service operation due to a hand injury can step on this foot switch and thus can efficiently receive operation assistance from the store clerk.

In an embodiment, a second image of the same content as the first image displayed by the first display unit 95 is displayed by the second display unit 96 if the decision unit 92 decides to approve the assistance request. However, in other examples, the second image of the same content as the first image displayed by the first display unit 95 may be displayed by the second display unit 96 if the acceptance unit 91 accepts the assistance request, without or before a decision to approve the assistance request.

In an embodiment, the transfer unit 94 transferring the assistance request to another device having a display unit equivalent to the second display unit if the decision unit 92 decides not to approve the assistance request is provided. However, the transfer unit 94 may not be provided in all examples. If the transfer unit 94 is not provided, a customer having a question or concern about the operation and a store clerk present in the space SP can talk to each other without using a microphone. Therefore, the voice processing circuits 310, 406 in the transaction processing device 30 and the settlement device 40 may not be necessary.

In an embodiment, the store clerk assistance button BCb is not displayed when the second image of the same content as the first image displayed by the first display unit 95 is displayed by the second display unit 96. However, in other examples, the store clerk assistance button BCb may be displayed by the second display unit 96.

In an embodiment, the self-service operation assistance function for the transaction processing system 100 having the input device 20, the transaction processing device 30, the settlement device 40, and the instruction device 50 is provided on a per settlement lane L basis. However, in other examples, the self-service operation assistance function can also be applied to a transaction processing system including a full-self-service-type POS terminal with which a customer performs the self-service operation from the registration of a merchandise item to the settlement and an attendant terminal for monitoring the POS terminal. That is, a configuration as the self-service operation assistance function can be incorporated in a POS terminal and an attendant terminal so that an attendant can operate the attendant terminal to assist the customer having a question or concern about the operation of the POS terminal.

In an embodiment, a second cashless settlement terminal may be provided in the transaction processing device 30 at a position operable by the store clerk, and the store clerk may thus be enabled to perform the operation of the cashless settlement terminal for the customer making the assistance request.

While some embodiments of the present disclosure have been described, these embodiments have been presented by way of example only, and are not intended to limit the scope of the disclosure. Indeed, these novel embodiments described herein may be embodied in a variety of other forms; furthermore, various omissions, substitutions, and changes in the form of the embodiment described herein may be made without departing from the scope of the disclosure. The accompanying claims and their equivalents are intended to cover such forms or modifications as would fall within the scope and of the disclosure.

## Claims

1. A transaction processing device, comprising:
a first display unit configured to display a first image for accepting an input operation by a customer;
a second display unit configured to display a second image for accepting an input operation by a store clerk, the second image having the same content as the first image; and
a control unit configured to:
receive a request for assistance from the customer via the first display unit, and
after an acceptance of the received request for assistance, pause acceptance of input operations via the first display unit but accept input operations via the second display unit displaying the second image, then cause the first image being displayed by the first display unit to indicate the input operations performed by the store clerk via the second display unit displaying the second image.

2. The transaction processing device according to claim 1, wherein the control unit is further configured to cause the second display unit to display the second image only after the acceptance of the received request for assistance.

3. The transaction processing device according to claim 2, wherein the control unit is further configured to provide the acceptance of the request for assistance based on an acceptance operation performed by the store clerk via the second display unit.

4. The transaction processing device according to claim 3, wherein the control unit is further configured to transfer the request for assistance to another device based on a non-acceptance operation performed by the store clerk via the second display unit.

5. The transaction processing device according to any one of claims 1 to 4, further comprising:
an automatic change machine; and
a cashless settlement terminal.

6. The transaction processing device according to any one of claims 1 to 5, further comprising:
a microphone and a speaker, wherein
after the acceptance of the received request for assistance, the microphone and the speaker permit the customer to communicate with the store clerk.

7. A transaction processing system, comprising:
a first transaction processing device; and
a second transaction processing device, wherein
the first transaction device includes:
a first display unit configured to display a first image for accepting an input operation by a customer;
a second display unit configured to display a second image for accepting an input operation by a first store clerk, the second image having the same content as the first image; and
a control unit configured to:
receive a request for assistance from the customer via the first display unit,
after an acceptance of the received request for assistance, pause acceptance of input operations via the first display unit but accept input operations via the second display unit displaying the second image, then cause the first image being displayed by the first display unit to indicate the input operations performed by the first store clerk via the second display unit displaying the second image,
cause the second display unit to display the second image only after the acceptance of the received request for assistance by the first store clerk via the second display unit, and
transfer the request for assistance to the second transaction device based on a non-acceptance operation performed by the first store clerk via the second display unit; and
the second transaction processing device includes:
a third display unit configured to display a third image for accepting an input operation by a second store clerk.

8. The transaction processing system according to claim 7, wherein the control unit is further configured to cause the second display unit to display the second image only after the acceptance of the received request for assistance by the first store clerk via the first display unit.

9. The transaction processing system according to claim 7 or 8, wherein the third image has the same content as the first image displayed by the first display unit.

10. The transaction processing system according to claim 9, wherein the control unit is further configured to: after the transfer of the received request for assistance, pause acceptance of input operations via the first display unit but accept input operations via the third display unit displaying the third image, then cause the first image being displayed by the first display unit to indicate the input operations performed by the second store clerk via the third display unit displaying the third image.

11. The transaction processing system according to claim 10, wherein the first transaction processing device and the second transaction processing device are on different checkout lanes.

12. The transaction processing system according to any one of claims 7 to 11, wherein the first transaction processing device and the second transaction processing device are on different checkout lanes.

13. The transaction processing system according to any one of claims 7 to 12, wherein the first transaction processing device further includes:
an automatic change machine; and
a cashless settlement terminal.

14. The transaction processing system according to any one of claims 7 to 13, wherein the first transaction processing device further includes:
a microphone and a speaker, wherein
after the acceptance of the received request for assistance, the microphone and the speaker permit the customer to communicate with the first store clerk.

15. A transaction processing method, comprising:
causing a first display unit of a transaction processing device to display a first image for accepting an input operation by a customer;
causing a second display unit of the transaction processing device to display a second image for accepting an input operation by a store clerk, the second image having the same content as the first image;
receiving a request for assistance from the customer via the first display unit; and
after an acceptance of the received request for assistance, pausing acceptance of input operations via the first display unit but accept input operations via the second display unit displaying the second image, then causing the first image being displayed by the first display unit to indicate the input operations performed by the store clerk via the second display unit displaying the second image.
